(19) Europäisches Patentamt

European Patent Office

Office européen des brevets

(11) Veröffentlichungsnummer: **0 525 463 B1**

(12) **EUROPÄISCHE PATENTSCHRIFT**

(45) Veröffentlichungstag der Patentschrift: **15.11.95**

(21) Anmeldenummer: **92111672.9**

(22) Anmeldetag: **09.07.92**

(51) Int. Cl.⁶: **C08G 63/183**, C08G 63/20, C08K 13/02, C08K 5/59, C08K 3/32, C08G 63/88, C08G 63/672, C08G 63/86, C08K 11/00

(54) Verfahren zur Herstellung eines Modifizierten Co-Polyethylenterephthalates.

(30) Priorität: **30.07.91 DE 4125167**

(43) Veröffentlichungstag der Anmeldung:
**03.02.93 Patentblatt 93/05**

(45) Bekanntmachung des Hinweises auf die Patenterteilung:
**15.11.95 Patentblatt 95/46**

(84) Benannte Vertragsstaaten:
**DE ES FR GB IT NL**

(56) Entgegenhaltungen:
**EP-A- 0 160 913**      **EP-A- 0 191 240**
**FR-A- 2 426 059**      **GB-A- 2 023 156**
**US-A- 3 803 097**      **US-A- 4 234 708**

(73) Patentinhaber: **Zimmer Aktiengesellschaft**
**Borsigallee 1**
**D-60388 Frankturt (DE)**

(72) Erfinder: **Thiele, Ulrich, Dr.**
**Geschwister-Scholl-Strasse 1**
**W-6454 Bruchköbel (DE)**
Erfinder: **Schumann, Heinz-Dieter, Dr.**
**Adalbert-Stifter-Strasse 35**
**W-6457 Maintal 2 (DE)**

EP 0 525 463 B1

**Beschreibung**

Die Erfindung betrifft ein Verfahren zur Herstellung eines modifizierten Co-Polyethylenterephthalates, das zur Verarbeitung durch Extrusions-Blasen geeignet ist.

Hohlkörper, insbesondere Getränke-Flaschen, werden durch Streck-Blasen oder durch Extrusions-Blasen hergestellt. Es ist bekannt, hierfür Co-Polyethylenterephthalate, die Isophthalsäure- und Diethylenglykol-Einheiten enthalten, einzusetzen (EP-B 0041035). Für die Verarbeitung durch Extrusions-Blasen sind derartige Co-Polyester jedoch weniger geeignet, da sie keine ausreichende Schmelze-Festigkeit aufweisen.

Eine höhere Schmelze-Festigkeit läßt sich durch Copolymerisation mit polyfunktionellen Monomeren erreichen, was aber zu einer deutlichen Erhöhung der Anzahl Stippen und Gele führt. Für das Extrusions-Blasen wurden daher Co-Polyethylenterephthalate vorgeschlagen, die mit Isophthalsäure, einem Verzweigungsmittel und einem Kettenabbruchmittel modifiziert wurden (US-A 4 234 708). Das Kettenabbruchmittel wirkt der Stippen-Bildung entgegen, die Wirkung ist jedoch stark konzentrationsabhängig. Leider ist diese Konzentration bei üblicher Polykondensationstechnologie kaum zu beherrschen, da schwankende Mengen Kettenabbruchmittel als Ethylenglykol-Ester mit den Polykondensationsbrüden ausgetragen werden. Eine gleichmäßige Polymer-Qualität, insbesondere in bezug auf Stippen-Anzahl, Viskosität und Farbe, ist so nicht sicherzustellen.

Es ist ferner bekannt, den Weißgrad von durch Umesterung und Polykondensation in Gegenwart eines Mangan und Titan enthaltenden Katalysators hergestellten faserbildenden Polyestern durch Zusatz bestimmter Dibenzoisochinolindion-Farbstoffe zu verbessern (US-A 4 745 174). Die Wirkung ist aber nicht ohne weiteres auf andere Polykondensationssysteme übertragbar, wobei die Ursache möglicherweise beim Katalysator liegt.

Aufgabe der vorliegenden Erfindung ist somit die Bereitstellung eines Verfahrens zur Herstellung eines Polyesters mit einer für die Verarbeitung durch Extrusions-Blasen ausreichenden Schmelze-Festigkeit, wobei die auf diese Weise daraus hergestellten Hohlkörper hohe Brillanz und neutrale, bläulich-weiße Farbe bei völliger Transparenz und Stippenfreiheit aufweisen sollen. Des weiteren sollten diese Hohlkörper zur Verpackung und Lagerung von Lebensmitteln geeignet sein, also organo-leptisch neutral sein.

Das durch das erfindungsgemäße Verfahren, erhaltene modifizierte Co-Polyethylenterephthalat weist eine Intrinsic-Viskosität von 0,8 bis 1,5 dl/g auf. Es enthält bezogen auf Polyester

0,5 - 5,0 Gew.-% Isophthalsäure-Einheiten,

0,7 - 2,0 Gew.-% Diethylenglykol-Einheiten,

300 - 2500 ppm Tri- oder Tetrahydroxyalkan-Einheiten,

80 - 150 ppm Antimon,

Phosphor entsprechend einem Gewichtsverhältnis Sb : P von mindestens 4,

und eine im Polyester lösliche Mischung eines roten und eines blauen Farbstoffes im Mengenverhältnis 3 : 1 bis 1 : 3, vorzugsweise 1 : 1, und in einer Gesamtkonzentration von maximal 5 ppm, die die an kristallisiertem Polyester-Granulat gemessenen Hunter-Farbwerte in einem Bereich von -2,5 bis +2,0 für den a-Wert und von +0,5 bis -5,0 für den b-Wert einstellt,

und ist zur Herstellung derartiger Hohlkörper durch Extrusions-Blasen geeignet.

Hergestellt wird der Co-Polyester durch Direkt-Veresterung von Terephthalsäure und 0,6 - 6,4 % Isophthalsäure mit Ethylenglykol und nachfolgender Polykondensation, wobei die Veresterung in Gegenwart von

0 - 1,5 Gew.-% zugesetztem Diethylenglykol,

375 - 3200 ppm Tri- oder Tetrahydroxyalkan,

100 - 190 ppm Antimon in Form einer organischen Antimon-Verbindung,

und einer im Polyester löslichen Mischung eines roten und eines blauen Farbstoffes im Mengenverhältnis 3 : 1 bis 1 : 3, vorzugsweise 1 : 1, und in einer Gesamtkonzentration von maximal 6,4 ppm, die die an kristallisiertem Polyester-Granulat gemessenen Hunter-Farbwerte in einem Bereich von -2,5 bis +2,0 für den a-Wert und von +0,5 bis -5,0 für den b-Wert einstellt,

- bei Bezug sämtlicher Mengenangaben auf die Summe der Dicarbonsäuren - erfolgt,

und dem Veresterungsgemisch vor der Polykondensation eine Phosphor-Sauerstoff-Verbindung entsprechend einem Gewichts-Verhältnis Sb : P von mindestens 4 zugesetzt wird,

und das Polykondensationsprodukt nach der Granulierung einer Wärmebehandlung in der festen Phase unterworfen wird.

Die Menge der eingesetzten Komponenten entspricht der theoretisch aufgrund der gewünschten Zusammensetzung des Co-Polyesters errechneten, mit Ausnahme des Ethylenglykols und des Diethylenglykols. Ethylenglykol wird bezogen auf die Summe der Dicarbonsäuren im Mol-Verhältnis 1,05 - 1,8, vorzugsweise 1,1 - 1,5, eingesetzt. Diethylenglykol entsteht im Polymerisations-System durch Dehydratation von Ethylenglykol-Gruppen, so daß die Menge lediglich bis zum gewünschten Gehalt im Polymer ergänzt werden muß. Bei einem Diethylenglykol-Gehalt im Polymer bis etwa 1 Gew.-% entfällt der Diethylenglykol-Zusatz, während bei z. B. 2,0 % etwa 1 %, bezogen auf das Polymer, zuzusetzen sind. Diethylenglykol bewirkt eine Senkung der Schmelztemperatur und des Kristallisationsvermögens, bei zu hohen Konzentrationen einhergehend mit einem Festigkeitsverlust des Polyesters. Die angegebenen Konzentrationen sind daher genau einzuhalten.

Als Tri- oder Tetrahydroxyalkane sind Trimethylolethan, Trimethylolpropan, Glycerin und Pentaerythrit zu nennen. Prinzipiell können auch andere Polyhydroxyalkane eingesetzt werden. Bevorzugt wird Pentaerythrit, da dieses im Polykondensationssystem praktisch nicht flüchtig und bezüglich der resultierenden Polyester-Eigenschaften günstig ist. Die Zugabe erfolgt zu einem beliebigen Zeitpunkt vor Vollendung der Polykondensation, vorzugsweise zu Beginn der Veresterung. Diese Polyhydroxy-Verbindungen bestimmen im wesentlichen die Schmelze-Festigkeit und die sonstigen rheologischen Eigenschaften des Polymers. Eine sorgfältige Begrenzung der Menge ist erforderlich, da andernfalls durch Vernetzung Gele oder Stippen und im Extremfall nichtthermoplastisches Verhalten auftreten.

Als Farbstoffe werden bevorzugt Estofilblau S-GFP und Estofilrot S-RBL der Firma Sandoz eingesetzt. Andere Farbstoffe mit einem ähnlichen Absorptionsspektrum, wie beispielsweise Xeres-Blau von Hoechst oder Telasolblau von Sandoz, sind ebenfalls verwendbar, vorausgesetzt sie unterliegen keiner Reaktion oder Zersetzung während der Herstellung und der Verarbeitung des Polyesters. Des weiteren müssen sie sich gegenüber den später in den Hohlkörpern zu lagernden Produkten neutral verhalten und im Fall von Lebensmitteln oder Getränken amtlich zugelassen sein. Blauer und roter Farbstoff werden im Mengenverhältnis 3 : 1 bis 1 : 3, vorzugsweise 1 : 1, bei einer Gesamtkonzentration von maximal 5 ppm, bezogen auf Polymer, eingesetzt. Die exakte Menge hängt vom verwendeten Farbstoffgemisch und in geringem Maße vom Co-Polyester ab. Die durch Vorversuch zu ermittelnde Konzentration wird derart gewählt, daß das kristallisierte Co-Polyethylenterephthalat - Granulat Hunter-Farbwerte im Bereich von -2,5 bis +2,0, vorzugsweise -1,5 bis ± 0,0 für den a-Wert, und +0,5 bis -5,0, vorzugsweise -2,5 bis -4,0, für den b-Wert aufweist.

Als Katalysator dient eine organische Antimon-Verbindung, wobei im Zusammenspiel mit den beiden einzusetzenden Farbstoffen Antimontriacetat zu den besten Farbeigenschaften des Co-Polyesters führt. Bei Überschreitung der erfindungsgemäßen Menge von maximal 150 ppm Sb im Polymer wird der Farbeindruck eher verbessert, die Homogenität des Produktes, ausgedrückt in Stippen pro Flächeneinheit, aber verschlechtert. Antimonglykolat und Antimon-tris (2-ethyl-hexanoat) sind gleichwertig, aber teurer.

Als Phosphor-Sauerstoff-Verbindung werden Phosphorsäure, phosphorige Säure oder deren Ester verwendet. Der Zusatz erfolgt zu einem beliebigen Zeitpunkt vor der Polykondensation, im allgemeinen gegen Ende der Veresterung oder während der 2. Phase der Veresterungsstufe. Die Phosphor-Verbindung dient als Stabilisator; ihre Menge im Verhältnis zum Antimontriacetat sollte möglichst gering sein, da andernfalls die Gefahr der Bildung von metallischem Antimon mit Verfärbung des Polyesters oder der Ausfällung von Sb-P-Verbindungen besteht.

Die Ausführung der Veresterung und Polykondensation erfolgt in bekannter Weise, vorzugsweise bei 260 - 290 °C und etwa 1 bar in der Veresterungsstufe, 20 - 100 mbar in der ersten Polykondensationsstufe und weniger als 5 mbar in der letzten Polykondensationsstufe.

Für die Herstellung von Hohlkörpern durch Extrusions-Blasen muß das Polymer eine verhältnismäßig hohe Intrinsic-Viskosität von mindestens 0,8 dl/g aufweisen. Diese hohe Intrinsic-Viskosität läßt sich durch Kristallisation und Nachkondensation in der festen Phase bei 180 - 230 °C unter Vakuum oder Inertgas, vorzugsweise Stickstoff, während 5 - 20 h, ausgehend von einem granulierten Vorkondensat mit einer Intrinsic-Viskosität von etwa 0,6 - 0,7 dl/g, erreichen. Ein geeignetes Verfahren ist zum Beispiel im US-Patent 4 064 112 beschrieben. Das so hergestellte modifizierte Co-Polyethylenterephthalat weist einen Acetaldehyd-Gehalt von weniger als 1,0 ppm, vorzugsweise von weniger als 0,6 ppm, bei minimaler Acetaldehyd-Nachbildung auf und eignet sich daher hervorragend für Verpackungen von Lebensmitteln, insbesondere von solchen mit hoher organo-leptischer Sensibilität, wie beispielsweise Flaschen für stille Mineralwässer.

Die Schmelze-Polykondensation kann auch bis zur gewünschten End-Intrinsic-Viskosität fortgeführt werden, wobei die letzte Stufe vorzugsweise in einem Dünnfilm-Reaktor, wie im US-Patent 3 617 225 beschrieben, ausgeführt wird. Anschließend wird das Polymere in Granulat mit einem Partikel-Gewicht von weniger als 15 mg bei regulärer Form überführt, und das Granulat einer Entaldehydisierung bei 150 - 180 °C in einem Strom trockener Luft oder Inertgas während 5 - 20 h unterworfen. Das so hergestellte modifizierte Co-Polyethylenterephthalat weist einen Acetaldehyd-Gehalt von weniger als 2,0 ppm, vorzugsweise von weniger als 1,0 ppm, auf, wobei diese Konzentration für die Mehrheit der Anwendungsfälle völlig ausreichend ist.

Die nachfolgenden Beispiele unterstützen die Erfindung, ohne sie einzuschränken. Die Eigenschaftswerte des Co-Polyesters wurden nach folgenden Methoden bestimmt:

Intrinsic Viskosität:

Etwa 125 mg Polyester werden in 25 ml eines Gemisches aus Phenol und 1.2-Dichlorbenzol (3 : 2) gelöst, und die Viskosität dieser Lösung bei 25 °C nach Ubbelohde bestimmt. Aus der so erhaltenen relativen Viskosität wird die Intrinsic Viskosität nach Billmeyer berechnet.

Schmelze-Festigkeit:

Das getrocknete Polymer wird in einem kleinen Extruder aufgeschmolzen und mit 132 g/h mit Hilfe einer Zahnradpumpe durch eine senkrechte Düse (Durchmesser 2,5 mm, Länge 6,35 mm) in Luft gedrückt. Die Temperatur der Schmelze am Düsenaustritt liegt 20 K über der DSC-Schmelztemperatur des Polymers, die Scherrate beträgt 20 $sec^{-1}$. An der Düsen-Unterseite wird der Strang zur Zeit t = 0 abgeschnitten. Nachdem der Schmelzestrang eine Strecke von 76,2 mm durchfallen hat, wird die Zeit $t_1$ und nach weiteren 76,2 mm die Zeit $t_1$ + $t_2$ gemessen. Die Schmelze-Festigkeit (MS) als Mittelwert von 10 Messungen berechnet sich gemäß

$$MS \;=\; \frac{t_1}{t_2}$$

Diethylenglykol-Gehalt:

Etwa 1 g Polyester wird in einem Bombenrohr mit 30 ml Methanol in Gegenwart von 50 mg/l Zinkacetat bei 200 °C vollständig umgeestert, und anschließend im Reaktionsgemisch das Diethylenglykol (DEG) gaschromatographisch bestimmt.

Acetaldehyd-Gehalt:

7 g unter flüssigem Stickstoff gemahlenes Polymer (0,25 - 0,75 mm Fraktion) werden in einen 300 ml Kolben mit Membranverschluß gegeben, 5 min mit Stickstoff (200 l/h) gespült, und der verschlossene Kolben 90 min in ein Ölbad von 150 °C gehängt. Unmittelbar danach wird der Acetaldehyd-Gehalt gaschromatographisch durch HEAD-SPACE-Analyse des gebildeten Acetaldehyd-Stickstoff-Gemisches bestimmt.

a- und b-Farbwerte:

Die Messung erfolgt an im Trockenschrank bei 150 °C während 1 h kristallisiertem Polyester-Granulat. Die a- und b-Farbwerte werden ermittelt, indem in einem Dreibereichsfarbmeßgerät der Farbton der Polyester-Probe mit drei Fotozellen, denen je ein Rot-, Grün- bzw. Blau-Filter vorgeschaltet ist, gemessen wird. Die Auswertung erfolgt nach HUNTER.

Stippen-Anzahl:

Aus dem kristallisierten und getrockneten Polyester-Granulat werden durch Extrusions-Blasen glattwandige Flaschen von mindestens 500 ml Rauminhalt hergestellt. Aus 10 Flaschen werden Wandstücke von 3 x 5 cm ausgeschnitten und alle mit bloßem Auge erkennbaren, klar abgegrenzten Stippen und Gelbereiche ausgezählt.

Beispiel 1:

Ein Reaktionsgemisch aus
191,6 kg Terephthalsäure

8,4 kg Isophthalsäure
85,0 kg Ethylenglykol
2,6 kg Diethylenglykol
700 ppm Pentaerythrit
120 ppm Antimon als Antimontriacetat
1,5 ppm Estofilrot S-RBL
1,5 ppm Estofilblau S-GFP

wurde bei 1 bar und einem Temperatur-Mittelwert von 275 °C verestert, danach mit 25 ppm Phosphor als Phosphorsäure versetzt und zweistufig, zunächst bei 50 mbar und 273 °C, dann bei 1 mbar und 276 °C bis zu einer Intrinsic-Viskosität von 0,65 dl/g polykondensiert. Das granulierte Polykondensat wurde anschließend einer Kristallisation und Nachkondensation in der Festphase, 1 h bei 160 °C plus 7 h bei 210 °C, unterworfen. Das Produkt zeigte folgende Eigenschaften:

| | |
|---|---|
| Intrinsic Viskosität: | 0,85 dl/g |
| Schmelze-Festigkeit: | 2,83 |
| DEG-Gehalt: | 1,65 Gew.-% |
| Acetaldehyd-Gehalt: | 0,8 ppm |
| a-Farbwert: | -1,3 |
| b-Farbwert: | -2,5 |
| Stippen-Anzahl pro 10 cm$^2$: | 0 bis 1 |

Ohne Pentaerythrit-Zusatz würde die Schmelze-Festigkeit des Co-Polyesters bei etwa 3,8 liegen.

Beispiel 2 (Vergleich):

Beispiel 1 wird wiederholt, jedoch unter Einsatz von 250 ppm Antimon. Der Co-Polyester wies folgende Eigenschaften auf:

| | |
|---|---|
| Intrinsic Viskosität: | 0,89 dl/g |
| Schmelze-Festigkeit: | 2,85 |
| DEG-Gehalt: | 1,70 Gew.-% |
| Acetaldehyd-Gehalt: | 0,8 ppm |
| a-Farbwert: | -1,6 |
| b-Farbwert: | -2,0 |
| Stippen-Anzahl pro 10 cm$^2$: | 2 bis 3 |

Beispiel 3 (Vergleich):

Beispiel 1 wird wiederholt, jedoch unter Einsatz von 2800 ppm Pentaerythrit und unter Wegfall der Zusätze an Estofilrot und Estofilblau. Der Co-Polyester wies folgende Eigenschaften auf:

| | |
|---|---|
| Intrinsic Viskosität: | 0,98 dl/g |
| Schmelze-Festigkeit: | 1,60 |
| DEG-Gehalt: | 1,65 Gew.-% |
| Acetaldehyd-Gehalt: | 0,7 ppm |
| a-Farbwert: | -2,3 |
| b-Farbwert: | +3,0 |
| Stippen-Anzahl pro 10 cm$^2$: | 3 bis 5 |

Beispiel 4:

Beispiel 1 wird wiederholt, jedoch unter Einsatz von 1500 ppm Pentaerythrit. Außerdem wird die Polykondensation in der Schmelzphase bis zu einer Intrinsic-Viskosität von 0,88 dl/g fortgeführt. Aus dem

EP 0 525 463 B1

Polykondensat wird Granulat mit einem Partikelgewicht von 12 mg hergestellt und dieses in strömender, trockener Luft bei 150 bis 170 °C während 12 h entaldehydisiert. Der Co-Polyester wies folgende Eigenschaften auf:

| Intrinsic Viskosität: | 0,89 dl/g |
|---|---|
| Schmelze-Festigkeit: | 2,31 |
| DEG-Gehalt: | 1,80 Gew.-% |
| Acetaldehyd-Gehalt: | 0,9 ppm |
| a-Farbwert: | -1,5 |
| b-Farbwert: | -2,5 |
| Stippen-Anzahl pro 10 cm$^2$: | 0 bis 1 |

Wie vorangehende Beispiele zeigen, wird die gewünschte Kombination von Eigenschaften des modifizierten Co-Polyethylenterephthalates nur erreicht, wenn sämtliche erfindungsgemäßen Parameter, d. h. Konzentrationen und Komponenten sowie Verfahrensweise, eingehalten werden.

**Patentansprüche**

1. Verfahren zur Herstellung eines modifizierten Co-Polyethylenterephthalates mit einer Intrinsic-Viskosität von 0,8 bis 1,5 dl/g gemessen gemäß Beschreibung zur Verarbeitung durch Extrusions-Blasen, enthaltend, bezogen auf Polyester,
   0,5 - 5,0 Gew.-% Isophthalsäure-Einheiten,
   0,7 - 2,0 Gew.-% Diethylenglykol-Einheiten,
   300 - 2500 ppm Tri- oder Tetrahydroxyalkan-Einheiten,
   80 - 150 ppm Antimon,
   Phosphor entsprechend einem Gewichts-Verhältnis Sb : P von mindestens 4,
   durch Direkt-Veresterung eines Gemisches aus Terephthalsäure und 0,6 - 6,4 % Isophthalsäure mit Ethylenglykol in Gegenwart von
   0 - 1,5 Gew.-% zugesetztem Diethylenglykol,
   375 - 3200 ppm Tri- oder Tetrahydroxyalkan,
   100 - 190 ppm Antimon in Form einer organischen Antimon-Verbindung
   und maximal 6,4 ppm Gesamtkonzentration einer im Polyester löslichen Mischung eines roten und eines blauen Farbstoffes im Mengenverhältnis 3 : 1 bis 1 : 3, vorzugsweise 1 : 1, die die an kristallisiertem Polyester-Granulat gemäß Beschreibung gemessenen Hunter-Farbwerte in einem Bereich von -2,5 bis +2,0 für den a-Wert und von +0,5 bis -5,0 für den b-Wert einstellt,
   - bei Bezug sämtlicher Mengenangaben auf die Summe der Dicarbonsäuren - ,
   anschließend Zugabe einer Phosphor-Sauerstoff-Verbindung entsprechend einem Gewichts-Verhältnis Sb : P von mindestens 4 und Polykondensation des erhaltenen Gemisches
   und Wärmebehandlung in der festen Phase des granulierten Polykondensationsproduktes.

2. Verfahren gemäß Anspruch 1, dadurch gekennzeichnet, daß die Schmelze-Polykondensation bei einer Intrinsic-Viskosität von etwa 0,6 - 0,7 dl/g abgebrochen wird und die Wärmebehandlung in einer Kristallisation und Nachkondensation des Granulates bei 180 -230 °C unter Inertgas oder unter Vakuum bis zu einer Intrinsic-Viskosität von 0,8 - 1,5 dl/g besteht.

3. Verfahren gemäß Anspruch 1, dadurch gekennzeichnet, daß die Schmelze-Polykondensation bis zu einer Intrinsic-Viskosität von 0,8 - 1,5 dl/g fortgeführt wird und die Wärmebehandlung in einer Entaldehydisierung des Granulates bei 150 - 180 °C in einem Strom trockener Luft oder Inertgas besteht, wobei das Granulat bei regulärer Form ein Partikel-Gewicht von weniger als 15 mg aufweist.

**Claims**

1. A process for preparing a modified co-polyethylene terephthalate with an intrinsic viscosity of 0.8 to 1.5 dl/g, measured in accordance with the description, for processing by extrusion blow moulding, containing, with respect to the polyester,
   0.5 - 5.0 wt.% of isophthalic acid units,
   0.7 - 2.0 wt.% of diethylene glycol units,

6

300 - 2500 ppm of tri or tetrahydroxyalkane units,

80 - 150 ppm of antimony,

phosphorus corresponding to a ratio by weight of Sb : P of at least 4,

by direct esterification of a mixture of terephthalic acid and 0.6 - 6.4 % isophthalic acid with ethylene glycol in the presence of

0 - 1.5 wt.% of added diethylene glycol,

375 - 3200 ppm of tri or tetrahydroxyalkane,

100 - 190 ppm of antimony in the form of an organic antimony compound

and a mixture, soluble in the polyester, at a maximum total concentration of 6.4 ppm, of a red and a blue colorant in the ratio by amount of 3 : 1 to 1 : 3, preferably 1 : 1, which adjusts the Hunter colour index in the crystallised polyester granules, measured in accordance with the description, within the range - 2.5 to +2.0 for the a-value and +0.5 to -5.0 for the b-value,

- all data on amounts being with respect to the sum of the dicarboxylic acids,

then adding a phosphorus-oxygen compound corresponding to a ratio by weight of Sb : P of at least 4 and polycondensation of the mixture obtained and heat treatment, in the solid phase, of the granulated polycondensation product.

2. A process according to Claim 1, characterised in that melt-polycondensation is interrupted at an intrinsic viscosity of about 0.6 - 0.7 dl/g and heat treatment comprises crystallisation and post-condensation of the granules at 180 - 230°C under an inert gas or under vacuum up to an intrinsic viscosity of 0.8 - 1.5 dl/g.

3. A process according to Claim 1, characterised in that melt-polycondensation is continued up to an intrinsic viscosity of 0.8 - 1.5 dl/g and heat treatment comprises removal of aldehyde from the granules in a current of dry air or an inert gas at 150 - 180°C, wherein granules with a regular shape have a particle weight of less than 15 mg.

**Revendications**

1. Procédé de production d'un co-poly(téréphtalate d'éthylène) modifié avec une viscosité intrinsèque de 0,8 à 1,5 dl/g mesuré selon le test de la description, destiné à être transformé par extrusion-soufflage contenant, par rapport au polyester,

0,5 - 5,0 % en poids d'unités acide isophtalique,

0,7 - 2,0 % en poids unités diéthylèneglycol,

300 - 2 500 ppm d'unités tri- ou tétrahydroxyalcane,

80 - 150 ppm d'antimoine,

du phosphore correspondant à une proportion pondérale Sb : P d'au moins 4,

par estérification directe d'un mélange d'acide téréphtalique et de 0,6 - 6,4 % d'acide isophtalique avec de l'éthylèneglycol en présence de

0 - 1,5 % en poids de diéthylèneglycol ajouté,

375 - 3 200 ppm de tri- ou tétrahydroxyalcane,

100 - 190 ppm d'antimoine sous forme d'un composé organique d'antimoine,

et au maximum 6,4 ppm de la concentration globale d'un mélange soluble dans le polyester d'un colorant rouge et d'un colorant bleu en proportion pondérale 3 : 1 à 1 : 3, de préférence 1 : 1, qui ajuste les valeurs chromatiques Hunter mesurées sur le granulé de polyester cristallisé selon la description dans un intervalle de -2,5 à +2,0 pour la valeur a et de +0,5 à -5,0 pour la valeur b,

- en rapportant toutes les indications de quantités à la somme des acides dicarboxyliques,

- et ensuite addition d'un composé phosphoré oxygéné correspondant à une proportion pondérale Sb : P d'au moins 4 et polycondensation du mélange obtenu

et traitement thermique en phase solide du produit de polycondensation granulé.

2. Procédé selon la revendication 1, caractérisé en ce qu'on interrompt la polycondensation en masse fondue pour une viscosité intrinsèque d'environ 0,6 - 0,7 dl/g et le traitement thermique consiste en une cristallisation et une post-condensation du granulé entre 180 et 230°C sous gaz inerte ou sous vide jusqu'à une viscosité intrinsèque de 0,8 - 1,5 dl/g.

3. Procédé selon la revendication 1, caractérisé en ce que la polycondensation en masse fondue est continuée jusqu'à une viscosité intrinsèque de 0,8 - 1,5 dl/g et le traitement thermique consiste en une

EP 0 525 463 B1

déaldéhydisation du granulé entre 150 et 180°C sous un courant d'air sec ou de gaz inerte, le granulé présentant une forme régulière et un poids de particules inférieur à 15 mg.

8